# EUROPÄISCHE PATENTANMELDUNG

(11) **EP 2 530 637 A1**
(43) Veröffentlichungstag der Anmeldung: **05.12.2012**
(21) Anmeldenummer: 12004167.8
(22) Anmeldetag: 31.05.2012
(51) Int. Cl.: G06Q 10/06

(54) **Verfahren der Datenfusion und Bereitstellung von Information in einem Computersystem**

(30) Priorität: 03.06.2011 DE 102011103305
(71) Anmelder: Eads Deutschland GmbH, 85521 Ottobrunn (DE)
(72) Erfinder: Haubach-Lippmann, Claudia, Dr., 84034 Landshut (DE); Burger, Thomas, 85649 Brunnthal (DE); Neujahr, Harald, 85570 Markt Schwaben (DE); Amador, Milton, 81541 München (DE)

(57) **Zusammenfassung**

Ein Verfahren der Datenfusion und Bereitstellung von Information in einem Computersystem betreffend die Ausführung von Arbeitsaufgaben an einem technischen Produkt, zeichnet sich dadurch aus, dass Produktinformation des technischen Produkts (1) aus einer Produktinformationsdatenbank (100), Bildinformation aus einer Bildinformationsdatenbank (200) und Arbeitsprozessinformation aus einer Arbeitsprozessdatenbank (300) im Computersystem (2) zu einem Datensatz einer fusionierten Prozessanweisung zusammengeführt werden und dass dieser Datensatz zu einer kombinierten Anzeigedatei verarbeitet wird, die an eine Anzeigeeinheit (24) gesandt wird, woraufhin die fusionierte Prozessanweisung optisch sichtbar angezeigt wird.

## Beschreibung

### TECHNISCHES GEBIET

Die vorliegende Erfindung betrifft ein Verfahren der Datenfusion und Bereitstellung von Information in einem Computersystem betreffend die Ausführung von Arbeitsaufgaben an einem technischen Produkt. Die Erfindung betrifft weiterhin ein Computersystem zur Durchführung eines derartigen Verfahrens.

### HINTERGRUND DER ERFINDUNG

Bei der Durchführung von Arbeitsaufgaben an hochkomplexen technischen Systemen, wie beispielsweise Luftfahrzeugen, besteht ein Problem darin, die an der Durchführung der Arbeitsaufgabe beteiligten Personen mit adäquaten Anweisungen für die durchzuführenden Arbeitsschritte zu versorgen.

### STAND DER TECHNIK

Dazu stehen bislang üblicherweise gedruckte oder elektronisch verfügbare Handbücher zur Verfügung, in denen die Arbeitsschritte verbal beschrieben sind, wobei diese Beschreibung in der Regel durch Abbildungen ergänzt ist. Derartige Handbuchbeschreibungen von Arbeitsschritten gehen stets von einem definierten Ausgangszustand des Produkts aus, an welchem die Arbeitsschritte durchzuführen sind. Das bedeutet, dass nach Beendigung des eigenlichten Arbeitsschrittes, beispielsweise einer Reparaturmaßnahme, weitere Arbeitsschritte durchgeführt werden müssen, um diesen Ausgangszustand wieder herzustellen. Auch wenn im Anschluss daran im gleichen Bereich des Produktes eine ähnliche Arbeitsaufgabe zu lösen ist, müssen einige Arbeitsschritte erneut ausgeführt werden. Diese Vorgehensweise ist erforderlich, um bei der Protokollierung der durchgeführten Tätigkeiten alle im Handbuch vorgeschriebenen Arbeitsschritte als erledigt kennzeichnen zu können.

Ist beispielsweise an einem Luftfahrzeug ein in einem Hohlraum hinter einer Rumpfklappe verborgenes Gerät auszutauschen, so ist zunächst die Rumpfklappe zu öffnen, anschließend ist das Gerät auszutauschen und die Rumpfklappe ist wieder zu schließen. Steht jetzt eine weitere Aufgabe an, bei welcher im selben Hohlraumabschnitt des Rumpfes eine andere Reparaturmaßnahme durchzuführen ist, die beispielsweise von einem auf andere Tätigkeiten spezialisierten Team durchgeführt wird, so muss wiederum zunächst die Rumpfklappe geöffnet werden, um an den Hohlraum heranzukommen. Derartige aus Gründen der Sicherheit erforderliche, aber doppelt durchgeführte Tätigkeiten erhöhen die erforderliche Arbeitszeit und damit die Kosten.

Des Weiteren ist es aufwendig und teuer, Handbücher für hochkomplexe technische Produkte zu erstellen und insbesondere die Zeichnungen dafür anzufertigen. Schließlich unterliegen derartige Handbücher, die eine statische Darstellung von Arbeitsprozessen aufweisen, einem sehr hohen Pflegeaufwand und die Suchzeiten, die für die Identifikation der für eine Arbeitsaufgabe durchzuführenden Schritte erforderich sind, sind vielfach sehr lang.

Es wäre daher wünschenswert, wenn ein stets aktuelles und an den aktuellen Bedarf angepasstes Werk zur Verfügung stünde, das einer am Produkt arbeitenden Person die erforderliche Information individuell bereitstellt. Dies erfolgt vorzugsweise auf elektronischem Weg, wobei viele geeignete Daten bereits in unterschiedlichen Datenbanken vorhanden sind.

### DARSTELLUNG DER ERFINDUNG

Es ist daher die Aufgabe der vorliegenden Erfindung, ein Verfahren zur Datenfusion und Bereitstellung von Informationen in einem Computersystem betreffend die Ausführung von Arbeitsaufgaben an einem technischem Produkt anzugeben, das unter Verwendung von bereits in unterschiedlichen Datenbanken vorhandener Information in der Lage ist, die für die Durchführung einer Arbeitsaufgabe am technischen Produkt erforderliche Information fallspezifisch zusammenzustellen und den die Arbeitsaufgabe durchführenden Personen als dynamisch generierte Anzeige zur Verfügung zu stellen.

Diese Aufgabe wird gelöst durch das Verfahren gemäß Patentanspruch 1.

Dieses erfindungsgemäße Verfahren zur Datenfusion und Bereitstellung von Information in einem Computersystem betreffend die Ausführung von Arbeitsaufgaben an einem technischen Produkt zeichnet sich dadurch aus, dass Produktinformation des technischen Produkts aus einer Produktinformationsdatenbank, Bildinformation aus einer Bildinformationsdatenbank und Arbeitsprozessinformation aus einer Arbeitsprozessdatenbank im Computersystem zu einem Datensatz einer fusionierten Prozessanweisung zusammengeführt werden und dass dieser Datensatz zu einer kombinierten Anzeigedatei verarbeitet wird, die an eine Anzeigeeinheit gesandt wird, woraufhin die fusionierte Prozessanweisung optisch sichtbar angezeigt wird.

Erfindungsgemäß werden also Produktinformation über das technische Produkt aus einer Produktinformationsdatenbank, Bildinformation aus einer Bildinformationsdatenbank und Arbeitsprozessinformation aus einer Arbeitsprozessdatenbank im Computersystem zu einem Datensatz einer fusionierten Prozessanweisung zusammengeführt.

Beispielsweise enthält die in der Produktinformationsdatenbank gespeicherte Produktinformation des betreffenden technischen Produkts Information über die Ausstattung des speziell zu bearbeitende Produkts. Wenn also das zu bearbeitende technische Produkt mit besonderen Ausstattungsmerkmalen versehen ist, so sind diese in der Produktinformationsdatenbank gespeichert und werden bei der durch Datenfusion bereitgestellten Prozessanweisung berücksichtigt.

Auch die Bildinformationsdatenbank enthält Bildinformation, die alle möglichen Ausstattungsvarianten umfasst, beispielsweise als Konstruktionszeichnungen.

Schließlich sind in der Arbeitsprozessdatenbank textuelle Anweisungen für durchzuführende Arbeitsprozesse für alle möglichen Ausführungsvarianten des technischen Produkts gespeichert.

Bei der Datenfusion wird auf der Basis der Produktinformation Arbeitsprozessinformation aus der Arbeitsprozessdatenbank und Bildinformation aus der Bildinformationsdatenbank abgerufen und diese Informationen werden zu einer fusionierten Prozessanweisung zusammengeführt. Dieser Datensatz wird anschließend zu einer kombinierten Anzeigedatei verarbeitet, aufgrund derer dann die Prozessanweisung mit Text und Bild unter Berücksichtigung der produktspezifischen Eigenschaften optisch sichtbar angezeigt wird.

Als ein Beispiel sei eine Arbeitsaufgabe angeführt, bei der ein Heizungswärmetauscher in der Heizungsanlage eines Kraftfahrzeugs ausgetauscht werden soll. Durch Abfrage der Produktinformationsdatenbank werden die spezifischen Ausstattungsmerkmale dieses Kraftfahrzeugs abgerufen und es wird beispielsweise festgestellt, dass dieses Kraftfahrzeug mit einer Klimaanlage ausgestattet ist und dass von dem Heizungswärmetauscher ein Kälteanlagenwärmetauscher vorgesehen ist. Mit dieser Produktinformation wird dann aus der Arbeitsprozessdatenbank eine Arbeitsprozessinformation abgerufen, die der am Kraftfahrzeug arbeitenden Person zunächst die Anweisung gibt, den Kälteanlagen-Wärmetauscher auszubauen und die hierfür erforderlichen Arbeitsschritte in textueller Form aufruft. Zudem wird aus der Bildinformationsdatenbank eine entsprechende Bildinformation abgerufen, die den Ausstattungszustand dieses Kraftfahrzeugs, nämlich mit Kälteanlagen-Wärmetauscher, enthält. Die fusionierte textuelle Arbeitsprozessinformation und Bildinformation wird auf der Anzeigeeinheit dargestellt und die am Kraftfahrzeug arbeitende Person kann sofort sehen, wie sie zunächst den Kälteanlagen-Wärmetauscher auszubauen hat. Im Anschluss daran, wenn diese Arbeitsschritte abgearbeitet worden sind, werden in einer neuen Phase des Verfahrens die Schritte dargestellt und beschrieben, die zum Ausbau des Heizungs-Wärmetauschers erforderlich sind. Dieses sehr einfache Beispiel zeigt, dass durch die dynamische Generierung der Prozessanweisung eine produktspezifische Arbeitsinformation mit dem erfindungsgemäßen Verfahren erzeugt werden kann.

Selbstverständlich lässt sich dieses Verfahren nicht nur zum Zwecke der Wartung einsetzen, sondern genauso gut während der Fertigung eines komplexen technischen Produktes oder beispielsweise bei einer Nachrüstung oder Umrüstung dieses Produkts.

### VORTEILE

Ein besonderer Vorteil des erfindungsgemäßen Verfahrens zur Datenfusion und zur Bereitstellung von Information in einem Computersystem betreffend die Ausführung von Arbeitsaufgaben an einem technischen Produkt liegt also darin, dass die Arbeitsanweisungen nicht in statisch erzeugten Handbüchern nachgelesen werden müssen, sondern produktspezifisch und sogar situationsspezifisch dynamisch erzeugt und angezeigt werden.

Eine besonders vorteilhafte Ausführungsform des erfindungsgemäßen Verfahrens zeichnet sich aus durch die folgenden Schritte:
a) Vorgabe einer Arbeitsaufgabe an einem zu bearbeitenden Objekt des technischen Produkts durch eine Bedienperson mittels einer Eingabeeinrichtung des Computersystems;
b) Identifizieren der Arbeitsaufgabe im Datenbestand der Arbeitsprozessdatenbank durch das Computersystem;
c) Bereitstellen
   - von Produkt-Identifikationsdaten betreffend das Produkt, an dem die Arbeitsaufgabe durchzuführen ist,
   - von Objekt-Identifikationsdaten des zu bearbeitenden Objekts und
   - von Arbeitsaufgaben-Identifikationsdaten betreffend die durchzuführende Arbeitsaufgabe als Gruppe von Arbeitsprozess-Datenmodulen
   in einem Arbeitsspeicher des Computersystems;
d) Ermitteln von involvierten Baugruppen und/oder Bauelementen in der Produktinformationsdatenbank durch das Computersystem mittels
   - der Arbeitsaufgaben-Identifikationsdaten anhand der bereitgestellten Arbeitsprozess-Datenmodule,
   - der in den Arbeitsprozess-Datenmodulen jeweils enthaltenen Verknüpfungsinformation,
   - der Produkt-Identifikationsdaten und
   - der Objekt-Identifikationsdaten;
e) Identifizieren eines Arbeitsprozess-Datenmoduls in der Arbeitsprozessdatenbank mittels der Produkt-Identifikationsdaten, der Objekt-Identifikationsdaten und der Arbeitsaufgaben-Identifikationsdaten aus der Gruppe der Arbeitsprozess-Datenmodule und Auswählen des identifizierten Arbeitsprozess-Datenmoduls;
f) Identifizieren eines im identifizierten Arbeitsprozess-Datenmodul enthaltenen Arbeitsaufgaben-Datenmoduls mittels der Produkt-Identifikationsdaten, der Objekt-Identifikationsdaten und der Arbeitsaufgaben-Identifikationsdaten;
g) Abrufen der Arbeitsschrittanweisungsdaten aus dem im Schritt f) identifizierten Arbeitsaufgaben-Datenmodul in Textform aus der Arbeitsprozessdatenbank und Speichern der Arbeitsschrittanweisungsdaten im Arbeitsspeicher des Computersystems;
h) Abrufen von Produktinformationsdaten des technischen Produkts aus der Produktinformationsdatenbank mittels der in dem im Schritt e) identifizierten Arbeitsprozess-Datenmodul enthaltenen Verknüpfungsinformation und Speichern der Produktinformationsdaten im Arbeitsspeicher des Computersystems;
i) Abrufen von Bildinformationsdaten von dem im Schritt f) identifizierten Arbeitsaufgaben-Datenmodul zugeordneten Baugruppen und/oder Bauelementen des technischen Produkts aus der Bildinformationsdatenbank mittels der in dem im Schritt e) identifizierten Arbeitsprozess-Datenmodul enthaltenen Verknüpfungsinformation und Speichern der Bildinformationsdaten im Arbeitsspeicher des Computersystems;
j) Fusion der im Arbeitsspeicher gespeicherten Arbeitsschrittanweisungsdaten in Textform mit den im Arbeitsspeicher gespeicherten Produktinformationsdaten und den im Arbeitsspeicher gespeicherten Bildinformationsdaten durch automatische Verlinkung im Computersystem zu einer eine fusionierte Prozessanweisung bildenden Anzeigedatei und
k) Weiterleiten der Anzeigedatei an eine Anzeigeeinheit des Computersystems zur Darstellung der fusionierten Prozessanweisung für einen der innerhalb der Arbeitsaufgabe durchzuführenden Arbeitsschritte.

Diese besondere Ausgestaltung des erfindungsgemäßen Verfahrens zeigt jene Schritte auf, die durchgeführt werden können, um in einer ganz besonders vorteilhaften Weise die angestrebte fusionierte Prozessanweisung zu erhalten. Zur Verfeinerung der Produktinformation sind in der Produktinformationsdatenbank auch Objektidentifikationsdaten gespeichert, sodass auch spezielle individuelle Objekteigenschaften des zu bearbeitenden Objekts (zum Beispiel des oben angegebenen Heizungswärmetauschers) in die Erzeugung der Prozessanweisung mit eingezogen werden. So kann im oben genannten Beispiel des Kraftfahrzeugs die Heizungsanlage mit einer thermostatischen Steuerung versehen sein, weshalb der Heizungswärmetauscher einen elektrischen Temperatursensor aufweist, sodass vor dem Ausbau die entsprechende elektrische Leitung abzustecken ist.

Der modulare Aufbau der Arbeitsaufgaben-Identifikationsdaten als Gruppe von Arbeitsprozess-Datenmodulen erlaubt es, in Abhängigkeit von den Produkt-Identifikationsdaten und den Objekt-Identifikationsdaten relevante Arbeitsprozess-Datenmodule auszuwählen und zu kombinieren. Auf diese Weise wird dynamisch eine Reihe von Prozessanweisungen in Abhängigkeit von der spezifischen Ausgestaltung des Produkts und des zu bearbeitenden Objekts zusammengestellt.

Die einzelnen Arbeitsschrittanweisungen werden dann als Datenelemente aus dem jeweiligen Arbeitsaufgaben-Datenmodul ausgelesen und letztendlich auf der Anzeigeeinheit textuell und mit entsprechenden Bilddarstellungen untermauert sequenziell dargestellt.

Vorteilhaft ist es auch, wenn sich das Verfahren dadurch auszeichnet,
- dass die in der Produktinformationsdatenbank elektronisch gespeicherte Produktinformation Information über Baugruppen und/oder Bauelemente des technischen Produkts aufweist;
- dass die in der Bildinformationsdatenbank elektronisch gespeicherte Bildinformation Information über Baugruppen und/oder Bauelemente des technischen Produkts aufweist;
- dass die in der Arbeitsprozessdatenbank elektronisch gespeicherte Arbeitsprozessinformation zu einer Vielzahl von Arbeitsaufgaben Arbeitsprozess-Datenmodule als erste Informationseinheiten enthält, die ihrerseits Arbeitsaufgaben-Datenmodule als zweite Informationseinheiten aufweisen, welche wiederum Arbeitsschrittanweisungsdaten enthalten und
- dass die Arbeitsprozess-Datenmodule Verknüpfungsinformation, insbesondere Relationen, zum technischen Produkt, insbesondere zu dessen Baugruppen und/oder Bauelementen, und zur Bildinformation aufweisen.

Diese Struktur der Inhalte der einzelnen Datenbanken ist besonders geeignet, um in dynamischer Weise die erforderlichen, anzuzeigenden Prozessanweisungen zu generieren.

Vorteilhaft ist es auch, wenn die Produktinformationsdatenbank neben genereller Produktinformation auch aktuelle Produktzustandsinformation enthält und wenn beide Informationen in den im Schritt h) abgerufenen Produktinformationsdaten enthalten sind.

Diese Weiterbildung des erfindungsgemäßen Verfahrens ermöglicht es, den aktuellen Produktzustand in die Generierung der fusionierten Prozessanweisungen einzubeziehen. Sind beispielsweise mehrere Arbeitsgruppen am zu bearbeitenden Produkt oder Objekt tätig, so kann es sein, dass eine erste Arbeitsgruppe bereits bestimmte Vorarbeiten erledigt hat, die für die Abarbeitung ihres Arbeitsauftrags erforderlich sind und dass dieselben Vorarbeiten auch für die Durchführung der Arbeitsaufgabe der zweiten Arbeitsgruppe durchzuführen wären. Nach dem erfindungsgemäßen Verfahren wird gemäß dieser Weiterbildung der von der ersten Arbeitsgruppe dokumentierte Produktzustand bei der Zusammenstellung der Prozessanweisungen für die zweite Arbeitsgruppe berücksichtigt, sodass diese sofort sieht, dass bestimmte Arbeitsaufgaben, beispielsweise das Abbauen einer Verkleidung, bereits erfolgt sind und nicht mehr von ihr durchgeführt werden müssen.

Besonders bevorzugt ist es weiterhin, wenn
- zur Identifikation des Arbeitsprozess-Datenmoduls im Schritt e) und/oder
- zur Identifikation des Arbeitsaufgaben-Datenmoduls in Schritt f) und/oder
- zur Identifikation der im Schritt h) abzurufenden Produktinformationsdaten Identifikationsinformation semantisch oder ontologisch ermittelt und herangezogen wird.

Diese semantische oder ontologische Ermittlung der Identifikationsinformation besitzt den Vorteil, dass die Erzeugung der fusionierten Prozessanweisung nicht nur durch in den einzelnen Dateien gespeicherte starre Referenzinformation (Relationen) sondern auch durch Auswertung von Zusammenhängen in autonomintelligenter Weise erfolgen kann.

Besonders bevorzugt ist es, wenn die in der Bildinformationsdatenbank gespeicherte Bildinformation dreidimensionale Bildinformation aufweist. Auf diese Weise ist es möglich, die zur Fusion der Prozessanweisung herangezogenen Bilddaten vor der Anzeige auf der Anzeigeeinheit in eine für den Bearbeiter geeignete Perspektive zu drehen. Besonders vorteilhaft ist es auch, wenn der Bearbeiter selbst diese Drehung durch Einflussnahme über eine entsprechende Steuereinrichtung des Computersystems herbeiführen kann und somit in die Lage versetzt wird, das auf der Anzeigeeinheit dargestellte Bild zu drehen.

Vorzugsweise weist die in der Bildinformationsdatenbank gespeicherte Bildinformation CAD-Information auf. Diese Übernahme von aus der Konstruktion des Produkts oder des Objekts bereits vorhandener CAD-Information ermöglicht es, ohne die Erstellung von zusätzlichen Zeichnungen oder Skizzen die erforderliche Bildinformation bereitzustellen und spart somit gegenüber herkömmlichen Handbüchern, die derartige speziell angefertigte Skizzen und Zeichnung enthalten, Kosten ein.

Besonders vorteilhaft ist es, wenn bei der Fusion der im Arbeitsspeicher gespeicherten Bildinformation mit den Arbeitsschrittanweisungsdaten und den Produktinformationsdaten zu einer fusionierten Prozessanweisung im Schritt j) aus den im Arbeitsspeicher gespeicherten Bildinformationsdaten eine zu den Produktinformationsdaten korrelierte Bilddarstellung erzeugt wird, die in die Anzeigedatei aufgenommen wird. Diese spezielle Korrelation zwischen Bildinformationsdaten und Produktinformationsdaten ermöglicht es, eine produktspezifische Bilddarstellung zu erzeugen.

Besonders vorteilhaft ist es auch, wenn die Abfolge der Verfahrensschritte a) bis k) für mehrere Bedienpersonen, die zeitgleich unterschiedliche Arbeitsaufgaben am Produkt ausführen, zeitgleich parallel oder zeitlich zueinander versetzt ausgeführt wird. Diese Variante des erfindungsgemäßen Verfahrens erhöht die Dynamisierung der den einzelnen Bedienpersonen angezeigten Prozessanweisungen, da bei der Datenfusion nicht nur der von den eigenen Arbeiten erzeugte Änderungsstatus am Produkt berücksichtigt wird, sondern auch die von den weiteren Bedienpersonen am Produkt vorgenommenen Änderungen mit in die Datenfusion einfließen.

Besonders vorteilhaft ist es, wenn nach dem Durchführen eines Arbeitsschrittes gemäß der angezeigten Prozessanweisung die erfolgte Erledigung des Arbeitsschrittes manuell oder automatisch über eine Eingabeeinrichtung in den Arbeitsspeicher des Computersystems eingegeben wird und dass das Computersystem daraufhin die Produktzustandsinformation in der Produktinformationsdatenbank aktualisiert. Diese Protokollierung von durchgeführten Arbeitsschritten im Computersystem und in der Folge in der Produktinformationsdatenbank stellt sicher, dass stets der aktuelle Zustand des Produkts dokumentiert ist und als Ausgangsbasis für die weiteren zu erzeugenden Prozessanweisungen herangezogen wird.

Eine besonders vorteilhafte Weiterbildung des erfindungsgemäßen Verfahrens zeichnet sich dadurch aus, dass weiterhin allgemeine Wissensinformationsdaten über das Produkt in einer Wissensdatenbank gespeichert sind, die im Schritt c) im Arbeitsspeicher des Computers bereitgestellt werden, und dass diese Daten bei der Identifikation des Arbeitsprozess-Datenmoduls in Schritt e) und des Arbeitsaufgaben-Datenmoduls in Schritt f) mit berücksichtigt werden. Die zusätzliche Berücksichtigung derartiger allgemeiner Wissensinformation über das Produkt ist dann vorteilhaft, wenn das Produkt bestimmte Eigenschaften aufweist, die - beispielsweise durch Veränderungen des Produkts oder durch unfallbedingte Reparaturmaßnahmen herbeigeführt worden sind und die bei der Durchführung bestimmter Arbeiten am Produkt - zu berücksichtigen sind.

Schließlich ist es auch sehr vorteilhaft, wenn weiterhin Ressourceninformationsdaten über für die Ausführung der Arbeitsaufgabe zur Verfügung stehende Ressourcen in einer Ressourcendatenbank gespeichert sind, die im Schritt c) im Arbeitsspeicher des Computers bereitgestellt werden, und wenn diese Daten bei der Identifikation des Arbeitsprozess-Datenmoduls in Schritt e) und des Arbeitsaufgaben-Datenmoduls in Schritt f) mit berücksichtigt werden. Diese zusätzliche Berücksichtigung von Ressourceninformationsdaten kann beispielsweise bedeuten, dass die Prozessanweisungen in Abhängigkeit von bestimmten an der Arbeitsstätte vorhandenen Ressourcen beeinflusst werden. So kann beispielsweise die Information bereitgestellt werden, dass bestimmte Spezialwerkzeuge zur Verfügung stehen oder nicht zur Verfügung stehen oder dass bestimmte Spezialisten vor Ort zur Bewältigung spezieller Arbeitsschritte verfügbar sind. Wird zum Beispiel die Ressourceninformation dass ein Speziallist für die Reparatur von bestimmten Instrumenten verfügbar ist, bereitgestellt, kann beispielsweise eine Arbeitsanweisung ausgegeben werden, wie bei der Reparatur des Instruments vorzugehen ist, wohingegen dann, wenn kein Speziallist zur Verfügung steht, die Arbeitsanweisung erscheint, das betreffende Instrument vollständig auszutauschen.

Besonders bevorzugt wird das erfindungsgemäße Verfahren dann eingesetzt, wenn die Arbeitsaufgabe eine Aufgabe auf einem oder mehreren der folgenden Tätigkeitsgebiete ist:
- Fertigung des Produkts,
- Wartung des Produkts,
- Reparatur des Produkts,
- Instandsetzung des Produkts,
- Nachrüstung oder Umrüstung des Produkts,
- Rückrüstung des Produkts,
- Außerdienststellung des Produkts,
- Recycling des Produkts.

Bei allen diesen Tätigkeiten - und noch vielen anderen denkbaren komplexeren Arbeiten an einem Produkt - kann mittels des erfindungsgemäßen Verfahrens sehr effizient vorgegangen werden.

Zur Durchführung des erfindungsgemäßen Verfahrens ist bevorzugt ein Computersystem vorgesehen mit einem Computer, der eine Eingabeeinrichtung, eine Anzeigeeinheit und zumindest einen Arbeitsspeicher aufweist, sowie mit einer Produktinformationsdatenbank, einer Bildinformationsdatenbank, einer Arbeitsprozessdatenbank und einem eine Beziehungsdatenbank aufweisenden technischen Informationsmagazin. Das Computersystem weist dazu eine in einem Speicher gespeicherte Software auf, die das erfindungsgemäße Verfahren implementiert und die auf dem Computer lauffähig ist oder läuft.

Vorzugsweise kann das Computersystem zudem eine Wissensdatenbank und/oder eine Ressourcendatenbank aufweisen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung eines komplexen technischen Produkts mit überlagertem semantischen Informationsnetz;
- Fig. 2: eine schematische Darstellung einer Datenverarbeitungseinrichtung zur Durchführung des erfindungsgemäßen Verfahrens;
- Fig. 3: eine schematische Darstellung einer Aneinanderreihung von Arbeitsprozess-Datenmodulen und
- Fig. 4: eine schematische Prozessdarstellung von miteinander gekoppelten Arbeitsprozess-Datenmodulen.

### DARSTELLUNG VON BEVORZUGTEN AUSFÜHRUNGSBEISPIELEN

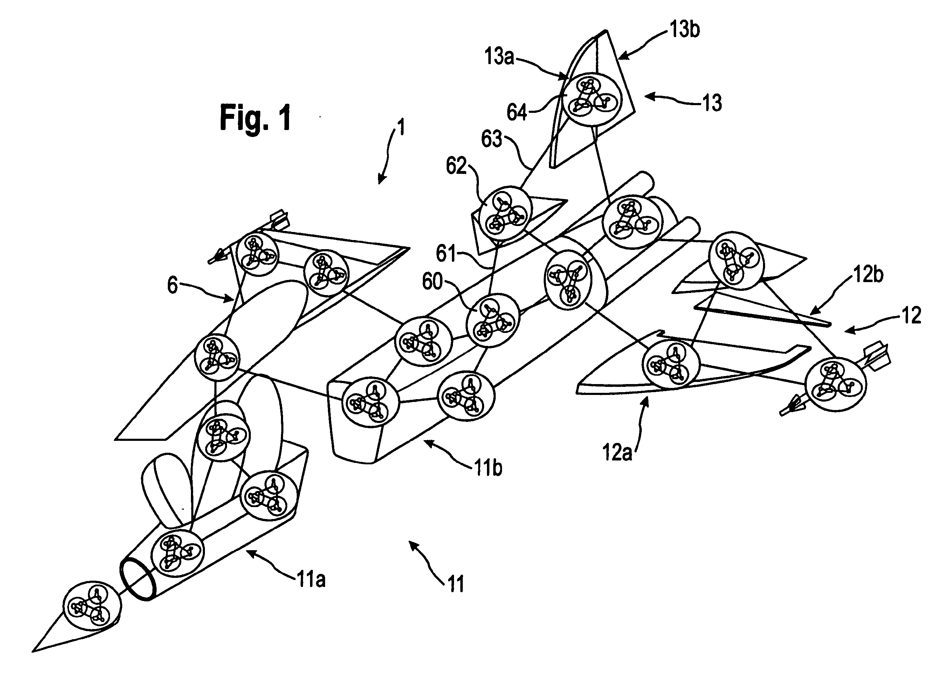

In Fig. 1 ist als technisches Produkt 1 im Sinne der Erfindung ein in einzelne Baugruppen 11, 12, 13 zerlegtes Luftfahrzeug dargestellt, wobei die Baugruppen 11, 12, 13 ihrerseits wiederum in Bauelemente 11a, 11b; 12a, 12b; 13a, 13b unterteilt sind. So ist das gezeigte Luftfahrzeug 1 beispielsweise unterteilt in die Baugruppen des Rumpfs 11, der Auftriebsflächen 12 und des Seitenleitwerks 13. Der Rumpf 11 ist beispielsweise weiter unterteilt in einen vorderen Rumpfabschnitt 11a und einen hinteren Rumpfabschnitt 11 b. Die Auftriebsflächen 12 sind beispielsweise unterteilt in eine Tragfläche 12a und ein Querruder 12b. Das Seitenleitwerk 13 ist beispielsweise unterteilt in ein stationäres Seitenleitwerk 13a und ein Seitenruder 13b. Die hier beschriebene Unterteilung des Luftfahrzeugs in Baugruppen und Bauelemente ist lediglich beispielhaft angegeben. Es ist für den Fachmann selbstverständlich, dass ein komplexes technisches Produkt, wie ein Luftfahrzeug, in eine Vielzahl weiterer Baugruppen und Bauelemente unterteilbar ist.

Diese Struktur des physikalischen Produkts Luftfahrzeug bildet den Modellkern für eine semantische Schicht von Metadaten-Information über das Produkt. Diese semantische Schicht ist in Fig. 1 durch ein semantisches Netzwerk 6 dargestellt, welches einzelne Informationspools 60, 62, 64 aufweist, die miteinander über semantische Assoziationen 61, 63 in Verbindung stehen. Jeder Baugruppe des Produkts ist dabei zumindest ein Informationspool zugeordnet.

Diese Informationspools enthalten jeweils eine Vielzahl von Informationselementen zu der entsprechenden Baugruppe des Luftfahrzeugs 1. Die in den Informationselementen enthaltene Information umfasst Daten, die in unterschiedlichen Datenbanken gespeichert sind. Diese Daten sind zum Beispiel hierarchisch strukturierte Daten des Luftfahrzeugs, einzelner Luftfahrzeugbaugruppen und einzelner Luftfahrzeugbauelemente. Diese Metadaten des Produkts Luftfahrzeug sind in einer Produktinformationsdatenbank 100 elektronisch gespeichert. Des Weiteren ist in den Informationselementen Bildinformation über das Luftfahrzeug, die einzelnen Baugruppen des Luftfahrzeugs und die Bauelemente des Luftfahrzeugs enthalten, wobei diese Bildinformation die Bildinformationsdaten umfasst, die in einer Bildinformationsdatenbank 200 elektronisch gespeichert sind.

Die in der Produktinformationsdatenbank 100 gespeicherten Metadaten des Produkts mit ihren Beziehungen untereinander und die in der Bildinformationsdatenbank gespeicherten Bildinformationsdaten mit ihren Beziehungen werden im semantischen Netz zu einem Beziehungsnetzwerk zwischen Produktinformationsdaten und Bildinformationsdaten zusammengeführt und bilden auf diese Weise eine übergeordnete Beziehungsdatenbank (Metadaten-Repository) als Produktdaten-Management-System PDM, wobei die einzelnen Daten selbst jedoch in den ursprünglichen Datenbanken (Produktinformationsdatenbank 100 und Bildinformationsdatenbank 200) verbleiben. Diese PDM-Beziehungsdatenbank enthält also nicht die Content-Daten, sondern nur Verweise auf die Speicherorte der in der Produktinformationsdatenbank 100 und der Bildinformationsdatenbank 200 gespeicherten Daten.

Des Weiteren ist eine Arbeitsprozessdatenbank 300 vorgesehen, in welcher Arbeitsprozessinformation für am Produkt ausführbare Tätigkeiten gespeichert ist.

Ein gemeinsames technisches Informationsmagazin CTIR (Common Technical Information Repository) über das Luftfahrzeug, also über das technische Produkt umfasst eine CTIR-Datenbank, in der Daten zur Referenzierung auf das Produktdaten-Management-System PDM und damit auf die darin gespeicherten Referenzierungen auf die in der Produktinformationsdatenbank 100 und in der Bildinformationsdatenbank 200 gespeicherten Metadaten zur Beschreibung des Produkts sowie Daten zur Referenzierung auf die Metadaten zur Beschreibung der Arbeitsprozesse enthalten sind, die auf die in der Arbeitsprozessdatenbank 300 gespeicherten Arbeitsprozessdaten verweisen. Die CTIR-Datenbank ist somit ebenfalls eine Beziehungsdatenbank, in der Zeiger gespeichert sind, die mittelbar über das PDM oder unmittelbar auf die Content-Datenbanken (Produktinformationsdatenbank und Bildinformationsdatenbank beziehungsweise Arbeitsprozessdatenbank) verweisen.

Auch eine Wissensdatenbank 400 mit darin gespeicherter allgemeiner Wissensinformation über das Produkt und/oder eine Ressourcendatenbank 500, in der Ressourceninformationsdaten über für die Ausführung der Arbeitsaufgabe zur Verfügung stehende Ressourcen gespeichert sind, können in analoger Weise mit dem gemeinsamen technischen Informationsmagazin CTIR verbunden sein. Ein derartiges System aus dem gemeinsamen technischen Informationsmagazin CTIR und externen Content-Datenbanken lässt sich problemlos um weitere externe Datenbanken und in der CTIR-Datenbank gespeicherte Beziehungsinformation zu diesen weiteren Datenbanken erweitern.

Alternativ ist es auch möglich, das gemeinsame technische Informationsmagazin CTIR als Daten-Warenhaus auszubilden, wobei dann die Inhalte der Produktinformationsdatenbank 100, der Bildinformationsdatenbank 200, der Arbeitsprozessdatenbank 300 und vorzugsweise auch der Wissensdatenbank 400 und/oder der Ressourcendatenbank 500 in der CTIR-Datenbank enthalten sind.

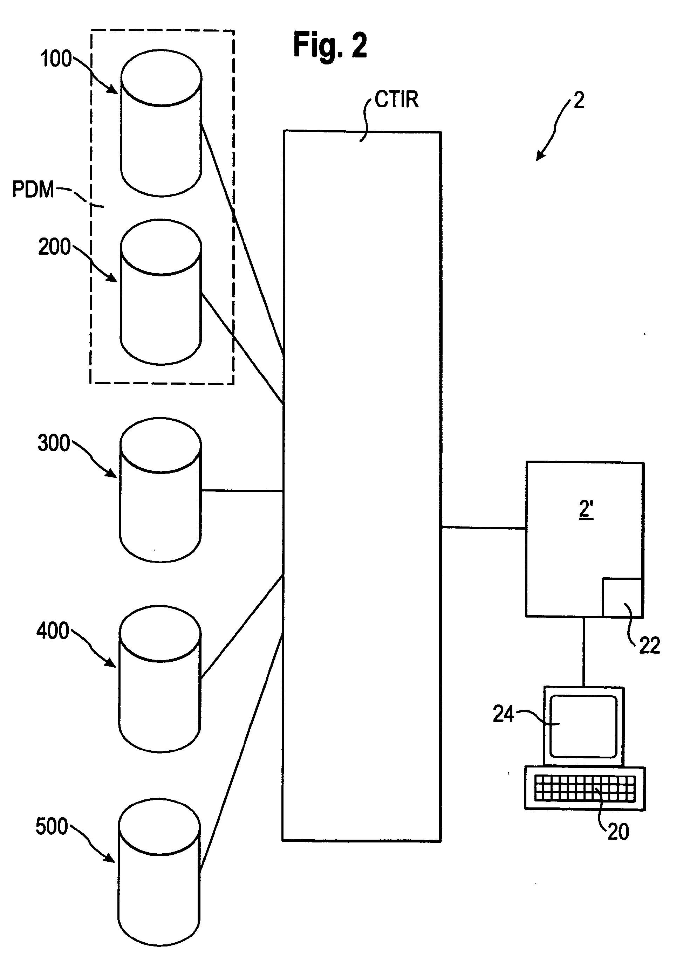

In Fig. 2 ist vereinfacht das Zusammenwirken der unterschiedlichen Datenbanken bei der Durchführung des erfindungsgemäßen Verfahrens dargestellt. In der Produktinformationsdatenbank 100 sind die vorgenannten Metadaten des Produkts mit ihren Beziehungen zueinander gespeichert. In der Bildinformationsdatenbank 200 sind Bildinformationsdaten über das Produkt mit ihren Beziehungen gespeichert. Beispielsweise sind derartige Bildinformationsdaten die aus der Konstruktion des Produktes stammenden CAD-Modelldaten. Die Produktinformationsdatenbank 100 und die Bildinformationsdatenbank 200 sind mit der PDM-Beziehungsdatenbank des Produktdaten-Management-Systems PDM zum Datenaustausch verbunden.

Ein Computer 2', die Produktinformationsdatenbank 100, die Bildinformationsdatenbank 200, die Arbeitsprozessdatenbank 300 und die CTIR-Datenbank, die auf die Arbeitsprozessdatenbank 300 und die PDM-Beziehungsdatenbank und damit indirekt auf die Produktinformationsdatenbank 100 und die Bildinformationsdatenbank 200 verweist, bilden ein Computersystem 2, auf dem das erfindungsgemäße Verfahren abläuft. Zusätzlich können die Wissensdatenbank 400 und/oder die Ressourcendatenbank 500 mit in das Computersystem eingebunden sein, wobei die CTIR-Datenbank dann auch Referenzierungen zu diesen Datenbanken enthält.

Ein auf dem Computer 2' laufendes Computerprogramm, welches das erfindungsgemäße Verfahren implementiert, ruft aus der Produktinformationsdatenbank 100 Produktinformation des technischen Produkts 1, also im Beispielfall des Luftfahrzeugs, sowie Bildinformation dazu aus der Bildinformationsdatenbank 200 ab. Des Weiteren wird für einen zu Beginn über eine Eingabeeinrichtung 20 eingegebenen vorgegebenen Arbeitsprozess Arbeitsprozessinformation aus der Arbeitsprozessdatenbank 300 abgerufen. Diese Informationen, die Produktinformation, die Bildinformation und die Arbeitsprozessinformation wird in einen Arbeitsspeicher 22 des Computers 2' geladen. Das auf dem Computer 2' ablaufende Programm führt die im Arbeitsspeicher 22 des Computers 2' zwischengespeicherten Produktinformationsdaten und Bildinformationsdaten unter Verwendung der Arbeitsprozessinformation zu einer fusionierten Prozessanweisung in Form eines Datensatzes zusammen. Dieser Datensatz wird dann zu einer kombinierten Anzeigedatei verarbeitet, die vom Computer 2' zu einer Anzeigeeinheit 24 gesandt wird und dort optisch sichtbar angezeigt wird. Diese angezeigte Prozessanweisung enthält textuelle Arbeitsprozessinformation sowie eine zugeordnete Bilddarstellung. Der Benutzer kann anhand dieser ihm angezeigten fusionierten Prozessanweisung lesen, welche Arbeitsschritte er durchzuführen hat und er kann in der Bilddarstellung sehen, wo und wie er die Arbeitsschritte zu bewerkstelligen hat. Hat der Benutzer die Arbeitsschritte abgearbeitet, so gibt er eine Bestätigung über die Eingabeeinrichtung 20 des Computers 2' ein.

Diese Vorgehensweise gemäß dem erfindungsgemäßen Verfahren läuft im Einzelnen wie folgt ab:
Zunächst gibt die Bedienperson mittels der beispielsweise als Tastatur oder als berührungsempfindlicher Bildschirm ausgebildeten Eingabeeinrichtung 20 des Computers 2' eine ihr vorgegebene Arbeitsaufgabe an einem zu bearbeitenden Objekt des technischen Produkts 1 ein. Der Computer 2' identifiziert daraufhin die Arbeitsaufgabe im Datenbestand der Arbeitsprozessdatenbank 300. Produkt-Identifikationsdaten betreffend das technische Produkt 1, an dem die Arbeitsaufgabe durchzuführen ist, sowie Objekt-Identifikationsdaten des zu bearbeitenden Objekts und Arbeitsaufgaben-Identifikationsdaten betreffend die durchzuführende Arbeitsaufgabe werden von der Produktinformationsdatenbank 100 beziehungsweise der Arbeitsprozessdatenbank 300 im Arbeitsspeicher 22 des Computers 2' bereitgestellt. Die durchzuführende Arbeitsaufgabe ist als Gruppe von Arbeitsprozess-Datenmodulen gebildet.

Aufgrund dieser bereitgestellten Daten werden die für die durchzuführenden Tätigkeiten involvierten Baugruppen und/oder Bauelemente in den bereitgestellten Daten der Produktinformationsdatenbank durch den Computer 2' mittels der Arbeitsaufgaben-Identifikationsdaten anhand der bereitgestellten Arbeitsprozess-Datenmodule, der in den Arbeitsprozess-Datenmodulen jeweils enthaltenen Verknüpfungsinformation, der Produkt-Identifikationsdaten und der Objekt-Identifikationsdaten ermittelt. Aus den im Arbeitsspeicher 22 bereitgestellten Arbeitsprozess-Datenmodulen wird mittels der Produkt-Identifikationsdaten, der Objekt-Identifikationsdaten und der Arbeits-Identifikationsdaten ein Arbeitsprozess-Datenmodul identifiziert und ausgewählt. Innerhalb dieses identifizierten Arbeitsprozess-Datenmoduls wird mittels der Produkt-Identifikationsdaten, der Objekt-Identifikationsdaten und der Arbeitsaufgaben-Identifikationsdaten ein Arbeitsaufgaben-Datenmodul aus einer Mehrzahl von im Arbeitsprozess-Datenmodul enthaltenen Arbeitsaufgaben-Datenmodulen identifiziert. Aus diesem identifizierten Arbeitsaufgaben-Datenmodul werden dann Arbeitsschrittanweisungsdaten, die in dem identifizierten Arbeitsaufgaben-Datenmodul codiert sind, in Textform aus der Arbeitsprozess-Datenbank 300 abgerufen und im Arbeitsspeicher 22 des Computers 2' zwischengespeichert.

Weiterhin werden mittels der im identifizierten Arbeitsprozess-Datenmodul enthaltenen Verknüpfungsinformation Produktinformationsdaten des technischen Produkts aus der Produktinformationsdatenbank abgerufen und diese Produktinformationsdaten werden ebenfalls im Arbeitsspeicher 22 des Computers 2' zwischengespeichert.

Weiterhin werden von den Baugruppen und/oder Bauelementen des technischen Produkts, die dem identifizierten Arbeitsaufgaben-Datenmodul zugeordnet sind, Bildinformationsdaten aus der Bildinformationsdatenbank abgerufen. Dieser Abruf der Bildinformationsdaten erfolgt mittels der in dem identifizierten Arbeitsprozess-Datenmodul enthaltenen Relationen. Die abgerufenen Bildinformationsdaten werden ebenfalls im Arbeitsspeicher 22 des Computers 2' zwischengespeichert.

In einem nächsten Schritt werden die im Arbeitsspeicher 22 des Computers 2' gespeicherten Arbeitsschrittanweisungsdaten, die in Textform vorliegen, mit den im Arbeitsspeicher 22 gespeicherten Produktinformationsdaten und den im Arbeitsspeicher 22 gespeicherten Bildinformationsdaten zu einer eine fusionierte Prozessanweisung bildenden Anzeigedatei zusammengefasst, was durch automatische Verlinkung der jeweiligen Daten miteinander auf der Grundlage der Verknüpfungsinformationen erfolgt. Diese Anzeigedatei wird dann an die Anzeigeeinheit 24 des Computers 2' weitergeleitet und die fusionierte Prozessanweisung für einen der innerhalb der Arbeitsaufgabe durchzuführenden Arbeitsschritte wird auf der Anzeigeeinheit 24 für den Bediener sichtbar angezeigt.

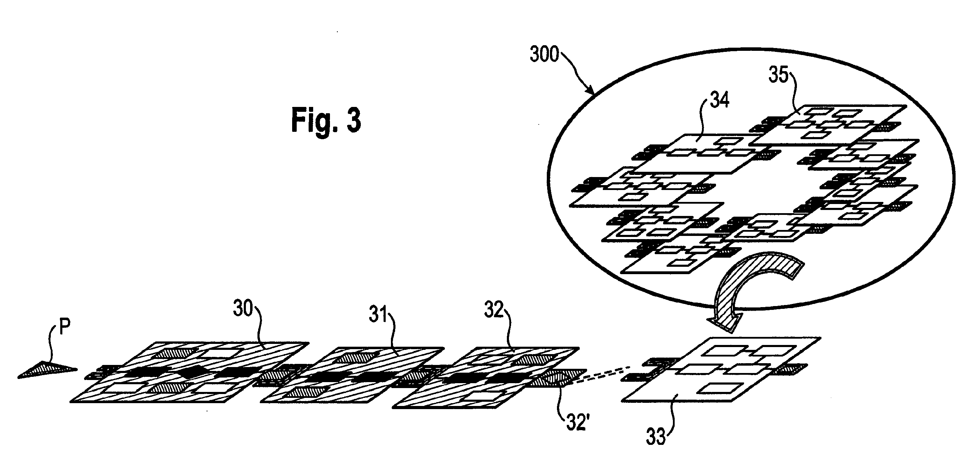

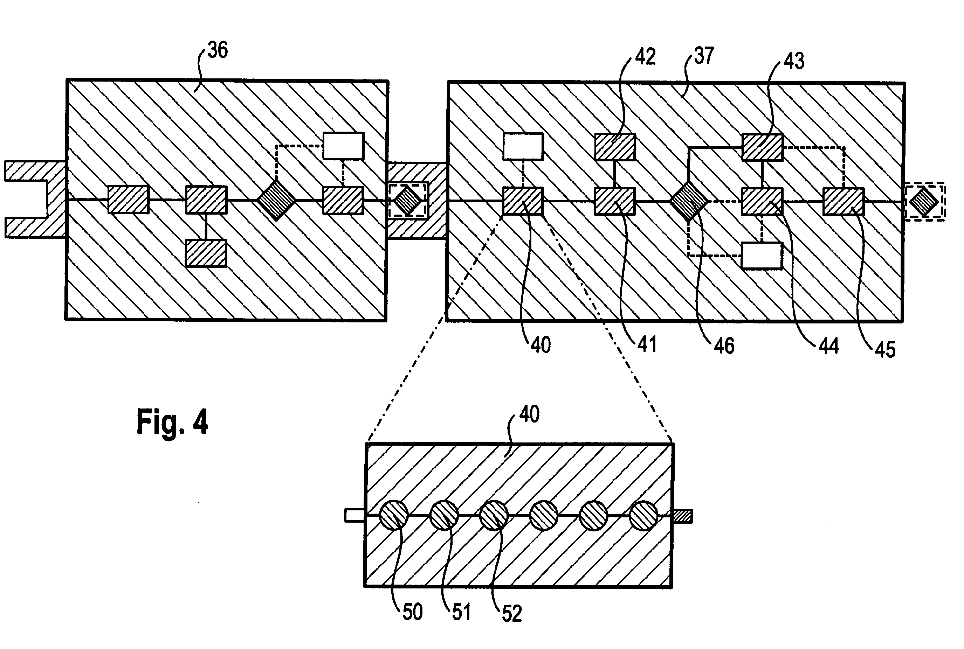

Fig. 3 zeigt beispielhaft die Modularität der in der Arbeitsprozessdatenbank 300 gespeicherten Arbeitsprozessinformation. Diese Arbeitsprozess-Datenmodule 30, 31, 32, 33, 34, 35, 36, 37 werden, wie bereits geschildert worden ist, mittels der Produkt-Identifikationsdaten, der Objekt-Identifikationsdaten und der Arbeitsaufgaben-Identifikationsdaten aus dem Vorrat der in der Arbeitsprozessdatenbank 300 gespeicherten Arbeitsaufgaben-Datenmodule identifiziert und herausgegriffen und für den Ablauf der am technischen Produkt 1 durchzuführenden Tätigkeit miteinander verknüpft. Dieser Vorgang ist in Fig. 3 bildhaft dargestellt. Der Fortschritt der durchzuführenden Tätigkeit ist als Pfeil P symbolhaft dargestellt. Die Arbeitsprozess-Datenmodule 30, 31 und 32 sind bereits zusammengesetzt worden. Das zuletzt angefügte Arbeitsprozess-Datenmodul 32 enthält an seinem freien Ende ein Entscheidungselement 32'. In Abhängigkeit von der darin getroffenen Entscheidung über die Fortführung des Verfahrens wird aus dem in der Arbeitsprozessdatenbank 300 vorhandenen Vorrat von Arbeitsprozess-Datenmodulen 33, 34, 35 das geeignete Arbeitsprozess-Datenmodul 33 ausgewählt und an das Arbeitsprozess-Datenmodul 32 angehängt. Es werden daraufhin die in dem Arbeitsprozess-Datenmodul 33 enthaltenen Arbeitsaufgaben-Datenmodule entsprechend Schritt f) des erfindungsgemäßen Verfahrens identifiziert, wie anhand der Fig. 4 im Arbeitsprozess-Datenmodul 37 dargestellt ist.

Das Arbeitsprozess-Datenmodul 37 enthält eine Mehrzahl von Arbeitsaufgaben-Datenmodulen 40, 42, 43, 44, 45, die entweder konsekutiv oder alternativ über Entscheidungspunkte 46 miteinander verknüpft sind. Auch können Entscheidungspunkte innerhalb eines Arbeitsaufgaben-Datenmoduls vorgesehen sein, wie in der Darstellung der Datenmodule 43 beziehungsweise 44 erkennbar ist.

Anhand des in Fig. 4 vergrößert dargestellten Arbeitsaufgaben-Datenmoduls 40 ist zu sehen, dass jedes Arbeitsaufgaben-Datenmodul eine Mehrzahl von Arbeitsschrittanweisungsdaten 50, 51, 52 aufweist, die in der Regel konsekutiv hintereinander abgearbeitet werden müssen, wobei, wie gesagt, auch hier ein früherer Ausstieg aus dem Arbeitsaufgaben-Datenmodul möglich ist, wie anhand der Datenmodule 43, 44 zu erkennen ist.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Verfahren der Datenfusion und Bereitstellung von Information in einem Computersystem betreffend die Ausführung von Arbeitsaufgaben an einem technischen Produkt,
**dadurch gekennzeichnet,**
**dass** Produktinformation des technischen Produkts (1) aus einer Produktinformationsdatenbank (100), Bildinformation aus einer Bildinformationsdatenbank (200) und Arbeitsprozessinformation aus einer Arbeitsprozessdatenbank (300) im Computersystem (2) zu einem Datensatz einer fusionierten Prozessanweisung zusammengeführt werden und dass dieser Datensatz zu einer kombinierten Anzeigedatei verarbeitet wird, die an eine Anzeigeeinheit (24) gesandt wird, woraufhin die fusionierte Prozessanweisung optisch sichtbar angezeigt wird.

2. Verfahren nach Anspruch 1,
**gekennzeichnet durch** die Schritte,
a) Vorgabe einer Arbeitsaufgabe an einem zu bearbeitenden Objekt des technischen Produkts (1) **durch** eine Bedienperson mittels einer Eingabeeinrichtung (20) des Computersystems (2);
b) Identifizieren der Arbeitsaufgabe im Datenbestand der Arbeitsprozessdatenbank (300) **durch** das Computersystem (2);
c) Bereitstellen
• von Produkt-Identifikationsdaten betreffend das Produkt (1), an dem die Arbeitsaufgabe durchzuführen ist,
• von Objekt-Identifikationsdaten des zu bearbeitenden Objekts und
• von Arbeitsaufgaben-Identifikationsdaten betreffend die durchzuführende Arbeitsaufgabe als Gruppe von Arbeitsprozess-Datenmodulen (30, 31, 32, 33, 34, 35, 36, 37) in einem Arbeitsspeicher (22) des Computersystems (2);
d) Ermitteln von involvierten Baugruppen und/oder Bauelementen in der Produktinformationsdatenbank **durch** das Computersystem (2) mittels
• der Arbeitsaufgaben-Identifikationsdaten anhand der bereitgestellten Arbeitsprozess-Datenmodule (30, 31, 32, 33, 34, 35, 36, 37),
• der in den Arbeitsprozess-Datenmodulen (30, 31, 32, 33, 34, 35, 36, 37) jeweils enthaltenen Verknüpfungsinformation,
• der Produkt-Identifikationsdaten und
• der Objekt-Identifikationsdaten;
e) Identifizieren eines Arbeitsprozess-Datenmoduls (30, 31, 32, 33, 34, 35, 36, 37) in der Arbeitsprozessdatenbank mittels der Produkt-Identifikationsdaten, der Objekt-Identifikationsdaten und der Arbeitsaufgaben-Identifikationsdaten aus der Gruppe der Arbeitsprozess-Datenmodule (30, 31, 32, 33, 34, 35, 36, 37) und Auswählen des identifizierten Arbeitsprozess-Datenmoduls (30, 31, 32, 33,34,35,36,37);
f) Identifizieren eines im identifizierten Arbeitsprozess-Datenmodul enthaltenen Arbeitsaufgaben-Datenmoduls (40, 42, 43, 44, 45) mittels der Produkt-Identifikationsdaten, der Objekt-Identifikationsdaten und der Arbeitsaufgaben-Identifikationsdaten;
g) Abrufen der Arbeitsschrittanweisungsdaten (50, 51, 52) aus dem im Schritt f) identifizierten Arbeitsaufgaben-Datenmodul (40, 42, 43, 44, 45) in Textform aus der Arbeitsprozessdatenbank (300) und Speichern der Arbeitsschrittanweisungsdaten (50, 51, 52) im Arbeitsspeicher (22) des Computersystems (2);
h) Abrufen von Produktinformationsdaten des technischen Produkts aus der Produktinformationsdatenbank mittels der in dem im Schritt e) identifizierten Arbeitsprozess-Datenmodul (30, 31, 32, 33, 34, 35, 36, 37) enthaltenen Verknüpfungsinformation und Speichern der Produktinformationsdaten im Arbeitsspeicher (22) des Computersystems (2);
i) Abrufen von Bildinformationsdaten von dem im Schritt f) identifizierten Arbeitsaufgaben-Datenmodul (40, 42, 43, 44, 45) zugeordneten Baugruppen und/oder Bauelementen des technischen Produkts aus der Bildinformationsdatenbank mittels der in dem im Schritt e) identifizierten Arbeitsprozess-Datenmodul (30, 31, 32, 33, 34, 35, 36, 37) enthaltenen Relationen und Speichern der Bildinformationsdaten im Arbeitsspeicher (22) des Computersystems (2);
j) Fusion der im Arbeitsspeicher (22) gespeicherten Arbeitsschrittanweisungsdaten (50, 51, 52) in Textform mit den im Arbeitsspeicher (22) gespeicherten Produktinformationsdaten und den im Arbeitsspeicher (22) gespeicherten Bildinformationsdaten **durch** automatische Verlinkung im Computersystem (2) zu einer eine fusionierte Prozessanweisung bildenden Anzeigedatei und
k) Weiterleiten der Anzeigedatei an eine Anzeigeeinheit (24) des Computersystems (2) zur Darstellung der fusionierten Prozessanweisung für einen der innerhalb der Arbeitsaufgabe durchzuführenden Arbeitsschritte.

3. Verfahren nach Anspruch 1 oder 2,
**gekennzeichnet durch** die Schritte:
- dass die in der Produktinformationsdatenbank (100) elektronisch gespeicherte Produktinformation Information über Baugruppen (11, 12, 13) und/oder Bauelemente (11 a, 11 b, 12a, 12b, 13a, 13b) des technischen Produkts (1) aufweist;
- dass die in der Bildinformationsdatenbank (200) elektronisch gespeicherte Bildinformation Information über Baugruppen (11, 12, 13) und/oder Bauelemente (11 a, 11 b, 12a, 12b, 13a, 13b) des technischen Produkts (1) aufweist;
- dass die in der Arbeitsprozessdatenbank (300) elektronisch gespeicherte Arbeitsprozessinformation zu einer Vielzahl von Arbeitsaufgaben Arbeitsprozess-Datenmodule (30, 31, 32, 33, 34, 35, 36, 37) als erste Informationseinheiten enthält, die ihrerseits Arbeitsaufgaben-Datenmodule (40, 42, 43, 44, 45) als zweite Informationseinheiten aufweisen, welche wiederum Arbeitsschrittanweisungsdaten (50, 51, 52) enthalten und
- dass die Arbeitsprozess-Datenmodule (30, 31, 32, 33, 34, 35, 36, 37, 38) Verknüpfungsinformation, insbesondere Relationen, zum technischen Produkt (1), insbesondere zu dessen Baugruppen (11, 12, 13) und/oder Bauelementen (11a, 11 b, 12a, 12b, 13a, 13b), und zur Bildinformation aufweisen.

4. Verfahren nach einem der vorhergehenden Ansprüche,
**dadurch gekennzeichnet,**
**dass** die Produktinformationsdatenbank (100) neben genereller Produktinformation auch aktuelle Produktzustandsinformation enthält und dass beide Informationen in den im Schritt h) abgerufenen Produktinformationsdaten enthalten sind.

5. Verfahren nach Anspruch 2, 3 oder 4,
**dadurch gekennzeichnet,**
**dass**
• zur Identifikation des Arbeitsprozess-Datenmoduls (30, 31, 32, 33, 34, 35, 36, 37) im Schritt e) und/oder
• zur Identifikation des Arbeitsaufgaben-Datenmoduls (40, 42, 43, 44, 45) in Schritt f) und/oder
• zur Identifikation der im Schritt h) abzurufenden Produktinformationsdaten
Identifikationsinformation semantisch oder ontologisch ermittelt und herangezogen wird.

6. Verfahren nach einem der vorhergehenden Ansprüche,
**dadurch gekennzeichnet,**
**dass** die in der Bildinformationsdatenbank (200) gespeicherte Bildinformation dreidimensionale Bildinformation aufweist.

7. Verfahren nach einem der vorhergehenden Ansprüche,
**dadurch gekennzeichnet,**
**dass** die in der Bildinformationsdatenbank (200) gespeicherte Bildinformation CAD-Information aufweist.

8. Verfahren nach einem der Ansprüche 2 bis 7,
**dadurch gekennzeichnet,**
**dass** bei der Fusion der im Arbeitsspeicher (22) gespeicherten Bildinformation mit den Arbeitsschrittanweisungsdaten und den Produktinformationsdaten zu einer fusionierten Prozessanweisung im Schritt j) aus den im Arbeitsspeicher gespeicherten Bildinformationsdaten eine zu den Produktinformationsdaten korrelierte Bilddarstellung erzeugt wird, die in die Anzeigedatei aufgenommen wird.

9. Verfahren nach einem der Ansprüche 2 bis 8,
**dadurch gekennzeichnet,**
**dass** die Abfolge der Verfahrensschritte a) bis k) für mehrere Bedienpersonen, die zeitgleich unterschiedliche Arbeitsaufgaben am Produkt ausführen, zeitgleich parallel oder zeitlich zueinander versetzt ausgeführt wird.

10. Verfahren nach einem der vorhergehenden Ansprüche,
**dadurch gekennzeichnet,**
**dass** nach dem Durchführen eines Arbeitsschrittes gemäß der angezeigten Prozessanweisung die erfolgte Erledigung des Arbeitsschrittes manuell oder automatisch über eine Eingabeeinrichtung in den Arbeitsspeicher des Computersystems (2) eingegeben wird und dass das Computersystem daraufhin die Produktzustandsinformation in der Produktinformationsdatenbank (100) aktualisiert.

11. Verfahren nach einem der Ansprüche 2 bis 10,
**dadurch gekennzeichnet,**
**dass** weiterhin allgemeine Wissensinformationsdaten über das Produkt in einer Wissensdatenbank (400) gespeichert sind, die im Schritt c) im Arbeitsspeicher des Computersystems (2) bereitgestellt werden, und dass diese Daten bei der Identifikation des Arbeitsprozess-Datenmoduls in Schritt e) und des Arbeitsaufgaben-Datenmoduls in Schritt f) mit berücksichtigt werden.

12. Verfahren nach einem der Ansprüche 2 bis 11,
**dadurch gekennzeichnet,**
**dass** weiterhin Ressourceninformationsdaten über für die Ausführung der Arbeitsaufgabe zur Verfügung stehende Ressourcen in einer Ressourcendatenbank (500) gespeichert sind, die im Schritt c) im Arbeitsspeicher des Computersystems (2) bereitgestellt werden, und dass diese Daten bei der Identifikation des Arbeitsprozess-Datenmoduls in Schritt e) und des Arbeitsaufgaben-Datenmoduls in Schritt f) mit berücksichtigt werden.

13. Verfahren nach einem der vorhergehenden Ansprüche,
**dadurch gekennzeichnet,**
**dass** die Arbeitsaufgabe eine Aufgabe auf einem oder mehreren der folgenden Tätigkeitsgebiete ist:
- Fertigung des Produkts,
- Wartung des Produkts,
- Reparatur des Produkts,
- Instandsetzung des Produkts,
- Nachrüstung oder Umrüstung des Produkts,
- Rückrüstung des Produkts,
- Außerdienststellung des Produkts,
- Recycling des Produkts.

14. Computersystem zur Durchführung eines Verfahrens gemäß einem der vorhergehenden Ansprüche, mit
- einem Computer (2), der
• eine Eingabeeinrichtung (20);
• eine Anzeigeeinheit (24);
• zumindest einen Arbeitsspeicher (22);
aufweist;
- einer Produktinformationsdatenbank (100),
- einer Bildinformationsdatenbank (200),
- einer Arbeitsprozessdatenbank (300) und
- einem eine Beziehungsdatenbank aufweisenden technischen Informationsmagazin (CTIR).

15. Computersystem nach Anspruch 14,
**dadurch gekennzeichnet,**
**dass** weiterhin
- eine Wissensdatenbank (400) und/oder
- eine Ressourcendatenbank (500) vorgesehen sind.
